# EUROPÄISCHE PATENTSCHRIFT

(11) **EP 3 321 557 B1**
(45) Veröffentlichungstag und Bekanntmachung des Hinweises auf die Patenterteilung: **27.11.2019**
(21) Anmeldenummer: 16198229.3
(22) Anmeldetag: 10.11.2016
(51) Int. Cl.: F16P 3/14

(54) **DEFORMATIONSEINRICHTUNG UND VERFAHREN ZUM BETREIBEN EINER DEFORMATIONSEINRICHTUNG**
DEFORMATION DEVICE AND METHOD FOR OPERATING A DEFORMATION DEVICE
DISPOSITIF DE DÉFORMATION ET PROCÉDÉ DE FONCTIONNEMENT D'UN DISPOSITIF DE DÉFORMATION

(43) Veröffentlichungstag der Anmeldung: 16.05.2018
(73) Patentinhaber: Fiessler Elektronik GmbH & Co. KG, 73734 Esslingen (DE)
(72) Erfinder: Fiessler, Dr. Lutz, 73773 Aichwald (DE); Fiessler, Götz, 73732 Esslingen (DE)
(74) Vertreter: Patentanwälte Magenbauer & Kollegen Partnerschaft mbB

(56) Entgegenhaltungen:
- EP-A1- 0 789 182
- EP-A1- 3 101 330
- WO-A1-98/47645
- US-A- 4 489 578

## Beschreibung

Die Erfindung betrifft eine Deformationseinrichtung mit einem Maschinenrahmen, an dem ein Werkzeugpaar angeordnet ist, wobei wenigstens eines der Werkzeuge längs eines Bewegungswegs relativbeweglich am Maschinenrahmen angeordnet ist und gegenüberliegend angeordnete Stirnflächen der Werkzeuge einen größenvariablen Arbeitsspalt ausbilden und wobei dem einen, insbesondere dem beweglichen, Werkzeug eine erste optische Sicherungseinrichtung zugeordnet ist, die für eine Absicherung des Arbeitsspalts eine erste Strahlenquelle zur Bereitstellung eines ersten Strahlenbündels parallel zu den Stirnflächen der Werkzeuge und einen ersten Lichtempfänger zum Empfang des ersten Strahlenbündels umfasst. Ferner betrifft die Erfindung ein Verfahren zum Betreiben einer Deformationseinrichtung gemäß Anspruch 10.

Aus der EP 3 101 330 A1, die zum Stand der Technik unter dem Artikel 54(3) EPÜ gehört, ist eine Gesenkbiegepresse bekannt, die eine Unterwange und eine Oberwange umfasst, die relativ zur Unterwange verfahrbar ist. Ferner umfasst die Gesenkbiegepresse eine Schutzeinrichtung zur Sicherung eines Gefahrenbereichs der Gesenkbiegepresse, wobei die Schutzwirkung der Schutzeinrichtung mittels eines von einem Bediener betätigbaren Zustimmschalters überwindbar ist. Der Zustimmschalter umfasst eine Strahlenquelle und einen Strahlenempfänger. Die Strahlrichtung der Strahlenquelle des Zustimmschalters verläuft parallel zur Biegelinie der Gesenkbiegepresse.

Aus der EP 0 789 182 A1 ist eine Sicherungseinrichtung für handbediente Werkzeugmaschinen bekannt, die mehrere Lichtschranken umfasst und die mit einer Steuereinrichtung der Maschinezusammenwirkt, wobei die Lichtschranken zumindest in der durch den Bewegungsweg des bewegten Werkzeuges definierten Ebene mit parallel zueinander und parallel zur vorlaufenden Kante des bewegten Werkzeuges ausgerichteten Lichtstrahlen angeordnet sind und wobei jede Lichtschranke einzeln wirksam oder unwirksam schaltbar ist, so dass in Abhängigkeit von der momentanen Position des in Zustellrichtung bewegten Werkzeuges nur die noch nicht von dem bewegten Werkzeug und die nicht vom Werkstück und die nicht vom Gegenwerkzeug unterbrochenen Lichtschranken jeweils wirksam geschaltet sind.

Die WO 98/47645 A1 offenbart ein Schutzsystem zum Schutz einer freien Zutritts- und/oder Zugriffsöffnung in einem Schutzgehäuse oder Schutzkäfig einer Maschine, indem beidseits der Zutritts- und/oder Zugriffsöffnung jeweils eine vertikale Standsäule mit je einer Sender- oder Empfängereinrichtung für einen Sicherheits-Lichtvorhang in Form eines flächendeckenden Mehrstrahlen-Schutzfeldes angeordnet ist und über dem Fussboden an der Vorderkante der Maschine im Bereich der Zutritts- und/oder Zugriffsöffnung eine weitere Sicherheitseinrichtung am Maschinenrahmen befestigt ist, die beim Eindringen eines Gegenstandes in ein Schutzfeld ein elektrisches Signal erzeugt, welches einen Aktuator eines Maschinenbetätigungsorgans und/oder einer Alarmeinrichtung auslöst.

Aus der US 4 489 578 A ist eine Vorrichtung zum Bestimmen einer Endstellung des Stößels einer Presse bekannt, wobei die Presse einen Pressentisch, ein auf diesem angeordnetes Unterwerkzeug, einen auf das Unterwerkzeug zu und von ihm weg bewegbaren Stößel und ein am Stößel angebrachtes Oberwerkzeug aufweist und wobei eine am Pressentisch angebrachte, bei der Bewegung des Stößels in Richtung auf das Unterwerkzeug auf den tiefsten Punkt des Oberwerkzeugs ansprechende Einrichtung durch eine am Stößel angebrachte, bei der Bewegung desselben in Richtung auf das Unterwerkzeug auf den höchsten Punkt desselben ansprechende Einrichtung und eine auf die jeweilige Stellung des Stößels ansprechende Einrichtung und durch eine mit den genannten Einrichtungen verbundene Steuereinheit zum Steuern des Antriebs für die Bewegung des Stößels in Abhängigkeit von den genannten Einrichtungen erzeugten Signalen vorgesehen sind.

Die Aufgabe der Erfindung besteht darin, eine Deformationseinrichtung sowie ein Verfahren zum Betreiben einer Deformationseinrichtung bereitzustellen, mit denen eine verbesserte Absicherung eines Bedieners gewährleistet werden kann.

Diese Aufgabe wird für eine Deformationseinrichtung der eingangs genannten Art mit den Merkmalen des Anspruchs 1 gelöst. Hierbei ist vorgesehen, dass einem der Werkzeuge, insbesondere dem beweglichen Werkzeug, eine zweite optische Sicherungseinrichtung zugeordnet ist, die eine zweite Strahlenquelle zur Bereitstellung eines zweiten Strahlenbündels und einen zweiten Lichtempfänger zum Empfang des zweiten Strahlenbündels zur Absicherung einer normal zum Bewegungsweg ausgerichteten, an die Stirnfläche anschließende Seitenfläche des Werkzeugs umfasst. Mit Hilfe der zweiten optischen Sicherungseinrichtung soll eine zusätzliche Absicherung des Umfeldes des Werkzeugs, insbesondere des beweglichen Werkzeugs, gewährleistet werden, welches mit der ersten optischen Sicherungseinrichtung nicht erfasst werden kann.

Von besonderem Interesse ist hierbei ein dem Benutzer zugewandter Raumabschnitt, der von einer den Arbeitsspalt durchsetzenden, horizontal ausgerichteten Arbeitsebene und einer Seitenfläche des, insbesondere beweglichen, Werkzeugs begrenzt wird, wobei die Seitenfläche auch als Vorderseite und Rückseite oder als größte Oberfläche des, insbesondere oberen, Werkzeugs bezeichnet werden kann. Beispielsweise kann in diesem Raumabschnitt eine Gefährdung des Benutzers für den Fall auftreten, dass die Deformationseinrichtung als Abkantpresse für Bleche ausgebildet ist und ein bereits vorgeformtes Blechteil mit einem zunächst in vertikaler Richtung nach oben ragenden Abschnitt in einem weiteren Abkantvorgang weiter deformiert werden soll. Im Zuge dieses weiteren Abkantvorgangs wird das Blechteil durch die Wechselwirkung der beiden Werkzeuge im Arbeitsspalt abgeknickt, wodurch sich der zunächst nach oben ragende Abschnitt auf einer Kreisbahn in Richtung der Vorderseite des, insbesondere beweglichen, Werkzeugs bewegt. Hierbei tritt die Gefahr auf, dass ein Benutzer, der das Blechteil an dem zunächst nach oben ragenden Abschnitt zum Zwecke der Stabilisierung ergreift, Quetschungen an den Händen erleidet, sofern sich der zunächst nach oben ragende Abschnitt im Zuge der Deformationsbewegung an die Vorderseite des, insbesondere beweglichen, Werkzeugs annähert. Diese potentielle Gefahr für den Benutzer kann mit Hilfe der zweiten optischen Sicherungseinrichtung erkannt werden, um vor einer tatsächlichen Gefährdung des Benutzers eine Abschaltung der Deformationseinrichtung vorzunehmen.

Alternativ kann die zweite optische Sicherungseinrichtung dazu eingesetzt werden, einen benutzerabgewandten Raumabschnitt zwischen einem verstellbaren Werkstückanschlag und dem, insbesondere ortsfest am Maschinenrahmen angebrachten, unteren Werkzeug abzusichern. Hierbei ist zu berücksichtigen, dass ein derartiger Werkstückanschlag für kleine Werkstücke bis unmittelbar vor das untere, insbesondere fest am Maschinenrahmen angebrachte, Werkzeug verstellt werden kann und hierbei eine Quetschgefahr für die Finger des Benutzers besteht.

Erfindungsgemäß ist vorgesehen, dass die zweite optische Sicherungseinrichtung gemeinsam mit der ersten optischen Sicherungseinrichtung längs des Bewegungswegs verstellbar am Maschinenrahmen oder am beweglichen Werkzeug angeordnet ist und für eine Absicherung einer benutzerzugewandten Vorderseite des Werkzeugs, insbesondere des beweglichen Werkzeugs, ausgebildet ist. Durch die Kopplung der beiden Sicherungseinrichtungen wird eine einfache Aufbauweise der Deformationseinrichtung gewährleistet. Dies ist insbesondere dann der Fall, wenn eine Position der ersten Sicherungseinrichtung mit Hilfe eines, insbesondere in die erste Sicherheitseinrichtung integrierten, Positionsmesssystems ermittelt werden kann, da in diesem Fall auch die Position der zweiten Sicherungseinrichtung ohne zusätzliche Maßnahmen bekannt ist.

Ferner ist erfindungsgemäß vorgesehen, dass die zweite Strahlenquelle zur Bereitstellung von Strahlen zumindest in einem Sicherungsraum mit quaderförmiger Erstreckung ausgebildet ist, dessen größte Oberfläche in einen vorgebbaren Abstand zur Vorderseite des Werkzeugs, vorzugsweise des oberen, insbesondere des beweglichen Werkzeugs, angeordnet ist und dass der die zweite Strahlenquelle und der zweite Lichtempfänger an gegenüberliegenden Schmalseiten des Sicherungsraums angeordnet sind. Für eine Absicherung des Arbeitsspalts mit Hilfe der ersten optischen Sicherungseinrichtung ist üblicherweise eine Verwendung von einem oder mehreren, parallel zu einer Stirnfläche des Werkzeugs ausgerichteten Lichtstrahlen vorgesehen, da der abzusichernde Bereich relativ klein ist. Demgegenüber muss die zweite optische Sicherungseinrichtung ein erheblich größeres Raumvolumen sichern, was in der Praxis mit einem Strahlenbündel aus einer Vielzahl von Lichtstrahlen erfolgt, die von der zweiten Strahlenquelle aus gesendet werden und die einen quaderförmigen Sicherheitsraum derart durchsetzen, dass bei einem Eingreifen eines Benutzers in den Sicherheitsraum stets eine Veränderung eines Sensorsignals, das vom zweiten Lichtempfänger bereitgestellt wird, um einen Betrag erfolgt, der eine zuverlässige Erkennung des Eingreifens des Benutzers ermöglicht. Die zweite optische Sicherungseinrichtung ist vorzugsweise derart ausgebildet, dass vertikal ausgerichtete Außenkanten der beiden parallel zueinander ausgerichteten größten Oberflächen des Sicherheitsraums parallel zum Bewegungsweg angeordnet sind und horizontal ausgerichtete Außenkanten der größten Oberflächen parallel zur Stirnfläche des Werkzeugs ausgerichtet sind. Ferner ist vorzugsweise vorgesehen, dass die zweite Strahlenquelle und der zweite Lichtempfänger an Schmalseiten des Sicherungsraums angeordnet sind, deren längste Kante sich in vertikaler Richtung parallel zum Bewegungsweg erstreckt. Der Abstand des Sicherungsraums von der Vorderseite des Werkzeugs kann verschwindend gewählt sein, in der Praxis wird vorgesehen sein, dass der Abstand des Sicherungsraums von der Vorderseite des Werkzeugs zumindest einige Zentimeter beträgt, um beispielsweise lokale Erhebungen an der Vorderseite des Werkzeugs, die zu einer Abschattung des Strahlenbündels der zweiten Strahlenquelle führen könnten, nicht in den Sicherungsraum hineinragen. Ein Abstand zwischen den größten Oberflächen des Sicherungsraums und somit eine Ausdehnung des Sicherheitsraums in Normalenrichtung gegenüber der Vorderseite des Werkzeugs kann ebenfalls mit wenigen Zentimetern angenommen werden.

Bei einer vorteilhaften Weiterbildung der Erfindung ist vorgesehen, dass die erste optische Sicherungseinrichtung und die zweite optische Sicherungseinrichtung gemeinsam mit einer Antriebseinrichtung gekoppelt sind, die für eine relativbewegliche Lagerung der beiden optischen Sicherungseinrichtungen am Maschinenrahmen oder am beweglichen Werkzeug ausgebildet sind. Hierdurch kann eine rasche Anpassung einer Positionierung für die beiden optischen Sicherungseinrichtungen in Abhängigkeit von der Geometrie des jeweils herzustellenden Werkstücks gewährleistet werden. Vorteilhaft ist es, wenn die beiden optischen Sicherungseinrichtungen im Zuge der Durchführung des Deformationsvorgangs für das Werkstück längs des Bewegungswegs verlagert werden können, um beispielsweise unmittelbar vor dem Zeitpunkt des Klemmens des Werkstücks im Arbeitsspalt eine Überwachung des Arbeitsspalts mit Hilfe der ersten optischen Sicherungseinrichtung zu ermöglichen und anschließend mit zunehmender Deformation des Werkstücks beispielhaft in vertikaler Richtung nach oben verlagert zu werden, um eine möglichst vollständige Abdeckung eines Gefährdungsbereichs durch die zweite optische Sicherungseinrichtung zu gewährleisten.

In weiterer Ausgestaltung der Erfindung ist vorgesehen, dass die Antriebseinrichtung für die beiden optischen Sicherungseinrichtungen aus der Gruppe: elektrischer Linearsteller, insbesondere Gewindespindelantrieb, pneumatischer Linearsteller, insbesondere Pneumatikzylinder, hydraulischer Linearsteller, insbesondere Hydraulikzylinder, ausgebildet ist.

Vorteilhaft ist es, wenn eine optische Achse der zweiten Strahlenquelle derart um eine parallel zum Bewegungsweg ausgerichtete Schwenkachse verschwenkt ist, dass die optische Achse einen vorgebbaren Winkel mit der Vorderseite des beweglichen Werkzeugs einnimmt. Durch diese Maßnahme soll verhindert werden, dass Randstrahlen, die von der zweiten Strahlenquelle in einem gewissen Winkel zur optischen Achse ausgesendet werden, an der Vorderseite des Werkzeugs reflektiert werden und damit gegebenenfalls die Empfindlichkeit der zweiten optischen Sicherungseinrichtung beeinträchtigen. Beispielhaft ist vorgesehen, dass die optische Achse der zweiten Strahlenquelle bezogen auf die Vorderseite des Werkzeugs um einen Betrag von wenigen Grad, beispielsweise 2 bis 4 Grad, um die parallel zum Bewegungsweg ausgerichtete Schwenkachse verschwenkt wird.

Die Aufgabe der Erfindung wird gemäß einem zweiten Aspekt durch die Merkmale des Anspruchs 5 gelöst. Hierbei ist vorgesehen, dass eine weitere optische Sicherungseinrichtung einem unteren Werkzeug zugeordnet ist und für eine Absicherung eines an eine benutzerabgewandte Rückseite des unteren Werkzeugs angrenzenden Raumabschnitts ausgebildet ist. Hierdurch wird eine Überwachung eines Raumabschnitts zwischen der benutzerabgewandten Rückseite des Werkzeugs und einem einstellbaren Werkstückanschlag ermöglicht. Diese weitere optische Sicherungseinrichtung kann ergänzend oder alternativ zu einer optischen Sicherungseinrichtung zum Einsatz kommen, die zur Absicherung der Vorderseite des beweglichen Werkzeugs vorgesehen ist.

Zweckmäßig ist es, wenn die erste optische Sicherungseinrichtung und die zweite optische Sicherungseinrichtung mit einer Sicherheitssteuerung verbunden sind, die zur Bereitstellung von Antriebsenergie an einen Werkzeugantrieb in Abhängigkeit von Sensorsignalen der beiden Sicherungseinrichtungen ausgebildet ist, wobei der Werkzeugantrieb für eine Bereitstellung einer Arbeitsbewegung für das bewegliche Werkzeug ausgebildet ist. Die Aufgabe der Sicherungssteuerung besteht zum einen in einer regelmäßigen, insbesondere sicheren, Abfrage von Sensorsignalen der beiden optischen Sicherungseinrichtungen. Bevorzugt ist die Sicherungssteuerung derart ausgebildet, dass sie nur dann eine Bereitstellung von Antriebsenergie an den Werkzeugantrieb vornimmt, wenn von beiden optischen Sicherungseinrichtungen plausible Sensorsignale vorliegen. Ferner ist die Sicherungssteuerung derart eingerichtet, dass sie bei Abweichungen in Sensorsignalen wenigstens einer der beiden Sicherungseinrichtungen einen Vergleich der Abweichung mit einem vorgebbaren Schwellwert vornimmt und eine Abschaltung der Bereitstellung von Antriebsenergie an den Werkzeugantrieb vornimmt, sofern die Abweichung im Sensorsignal den Schwellwert überschreitet.

In weiterer Ausgestaltung der Erfindung ist vorgesehen, dass die Sicherheitssteuerung für die Ansteuerung der beiden Sicherungseinrichtungen gemäß einer vorgebbaren zeitlichen Abfolge, vorzugsweise mit aufeinanderfolgenden, insbesondere sich teilweise überschneidenden zeitlichen Intervallen, ausgebildet ist. Bei dieser Weiterbildung der Erfindung wird der tatsächliche Bearbeitungsvorgang berücksichtigt, der mit Hilfe der Deformationseinrichtung vorgenommen werden kann. Hierbei kann es unter Umständen störend sein, wenn beide Sicherheitseinrichtungen zeitweilig betrieben werden, so dass die Sicherheitssteuerung dazu ausgebildet ist, die beiden Sicherheitseinrichtungen in einer vorgebbaren zeitlichen Abfolge zu aktivieren und zu deaktivieren.

Bei einer vorteilhaften Weiterbildung der Erfindung ist vorgesehen, dass der zweite Lichtempfänger mehrere, insbesondere längs des Bewegungswegs aneinandergereihte, lichtempfindliche Sensorelemente umfasst und dass die Sicherheitssteuerung für eine Unterscheidung von Unterbrechungen des Strahlenbündels anhand von vorgebbaren Unterbrechungskriterien ausgebildet ist. Vorzugsweise sind die Sensorelemente zu einem Zeilensensor angeordnet, wobei benachbart angeordnete Sensorelemente einen minimalen Abstand zueinander aufweisen, um eine möglichst vollständige und lückenlose Erfassung von Lichtstrahlen zu ermöglichen, die die Schmalseite des Sicherheitsraums durchsetzen und auf den zweiten Lichtempfänger auftreffen. Bei einer Weiterbildung der Erfindung kann vorgesehen sein, dass jedem der Sensorelemente ein optisches Element, insbesondere eine Linse, zugeordnet ist, um eine Vergrößerung eines Erfassungsbereichs für das jeweilige Sensorelement zu ermöglichen.

In weiterer Ausgestaltung der Erfindung ist vorgesehen, dass eine Sicherheitssteuerung mit einer Antriebseinrichtung für einen Werkstückanschlag verbunden ist und zur Bereitstellung von Antriebsenergie an die Antriebseinrichtung in Abhängigkeit von Sensorsignalen der weiteren Sicherungseinrichtung ausgebildet ist, wobei die Antriebseinrichtung für eine Bereitstellung einer Einstellbewegung des Werkstückanschlags gegenüber einer benutzerabgewandten Rückseite eines unteren Werkzeugs ausgebildet ist. Vorzugsweise ist vorgesehen, dass die Sicherheitssteuerung zumindest eine Bereitstellung von Antriebsenergie an die Antriebseinrichtung unterbricht, sobald ein Sensorsignal der weiteren Sicherheitseinrichtung ein Eingreifen eines Benutzers in den Raumabschnitt zwischen einer Hinterkante des unteren Werkzeugs und der Vorderkante des Werkstückanschlags signalisiert, um dadurch eine Quetschgefahr für den Benutzer abzuwenden.

Die Aufgabe der Erfindung wird für ein Verfahren zum Betreiben einer Deformationseinrichtung mit den nachfolgenden Schritten gelöst: Bewegen eines ersten, beweglich an einem Maschinenrahmen angeordneten Werkzeugs längs eines Bewegungswegs in Richtung eines zweiten, starr am Maschinenrahmen angeordneten Werkzeugs zur Verkleinerung eines von gegenüberliegend angeordneten Stirnflächen der Werkzeuge begrenzten größenvariablen Arbeitsspalts, Überwachung des Arbeitsspalts mit einer ersten optischen Sicherungseinrichtung, die ein erstes Strahlenbündel bereitstellt, das parallel zu den Stirnflächen der Werkzeuge ausgerichtet ist und das von einem ersten Lichtempfänger erfasst wird, Überwachung eines Sicherungsraums, der einer Seitenfläche eines Werkzeugs vorgelagert ist, mit einer zweiten optischen Sicherungseinrichtung, die ein Strahlenbündel bereitstellt, das den Sicherungsraum durchsetzt, das von einem zweiten Lichtempfänger erfasst wird, wobei die beiden Lichtempfänger jeweils ein Sensorsignal an eine Sicherheitssteuerung bereitstellen, die eine Bereitstellung von Antriebsenergie an einen Werkzeugantrieb, der für eine Bereitstellung einer Arbeitsbewegung für das bewegliche Werkzeug ausgebildet ist, unterbricht, wenn eine Unterbrechung des jeweiligen Strahlenbündels eine Änderung des jeweiligen Sensorsignals bewirkt, die größer als ein vorgebbarer Schwellwert ist, wobei sich die erste optische Sicherungseinrichtung und die zweite optische Sicherungseinrichtung synchron zu dem beweglich am Maschinenrahmen angeordneten Werkzeug bewegen.

In weiterer Ausgestaltung des Verfahrens ist vorgesehen, dass eine zumindest teilweise Deaktivierung der zweiten optischen Sicherungseinrichtung erfolgt, wenn ein Abstand zwischen den Stirnflächen der Werkzeuge einen vorgebbaren Abstandswert unterschreitet. Diese Vorgehensweise kann vorgesehen werden, wenn die zweite optische Sicherungseinrichtung einen Raumabschnitt absichert, der unmittelbar an die Seitenfläche des Werkzeugs angrenzt und somit so nahe an der Seitenfläche des Werkzeugs angeordnet ist, dass bei einem unmittelbar bevorstehenden Eindringen des Werkstücks in diesen Raumabschnitt kein manuelles Eingreifen des Benutzers in den Raumabschnitt mehr möglich ist, da der Spalt zwischen Werkzeug und Seitenfläche bereits zu gering ist.

Bei einer alternativen Ausgestaltung des Verfahrens ist vorgesehen, dass eine zumindest teilweise Aktivierung der zweiten optischen Sicherungseinrichtung erfolgt, wenn ein Abstand zwischen den Stirnflächen der Werkzeuge einen vorgebbaren Abstandswert unterschreitet. Vorzugsweise werden bei einem Lichtgitter, das aus mehreren Strahlenquellen und jeweils gegenüberliegend angeordneten Lichtempfängern aufgebaut ist, wobei ein Strahlenbündel einer Strahlenquelle auf den gegenüberliegend angeordneten Lichtempfänger ausgerichtet ist und wobei die Strahlenquellen und Lichtempfänger den zu überwachenden Raumabschnitt jeweils seitlich begrenzen, jeweils diejenigen Strahlenquellen aktiviert, die bei einem Deformationsvorgang für das zu bearbeitende Werkstück nicht unterbrochen werden. Besonders bevorzugt erfolgt diese Aktivierung zu einem Zeitpunkt, zu dem sich das Werkstück im Zuge des Deformationsvorgangs derart an die Seitenfläche des Werkzeugs annähert, dass eine Quetschgefahr, beispielsweise für eine Hand des Benutzers, auftreten könnte.

In weiterer Ausgestaltung des Verfahrens ist vorgesehen, dass die Sicherheitssteuerung die Bereitstellung von Antriebsenergie an den Werkzeugantrieb und/oder an eine Antriebseinrichtung für einen Werkzeuganschlag unterbricht, wenn anhand einer zumindest teilweisen Unterbrechung des jeweiligen Strahlenbündels ein Eingriff eines Benutzers in einem vom jeweiligen Strahlenbündel abgesicherten Raumabschnitt ermittelt wird, insbesondere eine Änderung des Sensorsignals des jeweiligen Lichtsensors um einen vorgebbaren Wert, wenigstens 20 Prozent, bewirkt vorliegt.

Eine vorteilhafte Ausführungsform der Erfindung ist in der Zeichnung dargestellt. Hierbei zeigt:
- Figur 1: eine Vorderansicht einer Deformationseinrichtung mit zwei optischen Sicherungseinrichtungen, deren Komponenten jeweils beidseitig am Maschinenrahmen angeordnet sind,
- Figur 2: eine seitliche Schnittdarstellung der Deformationseinrichtung gemäß der Figur 1, und
- Figur 3: eine schematische Draufsicht auf die Deformationseinrichtung.

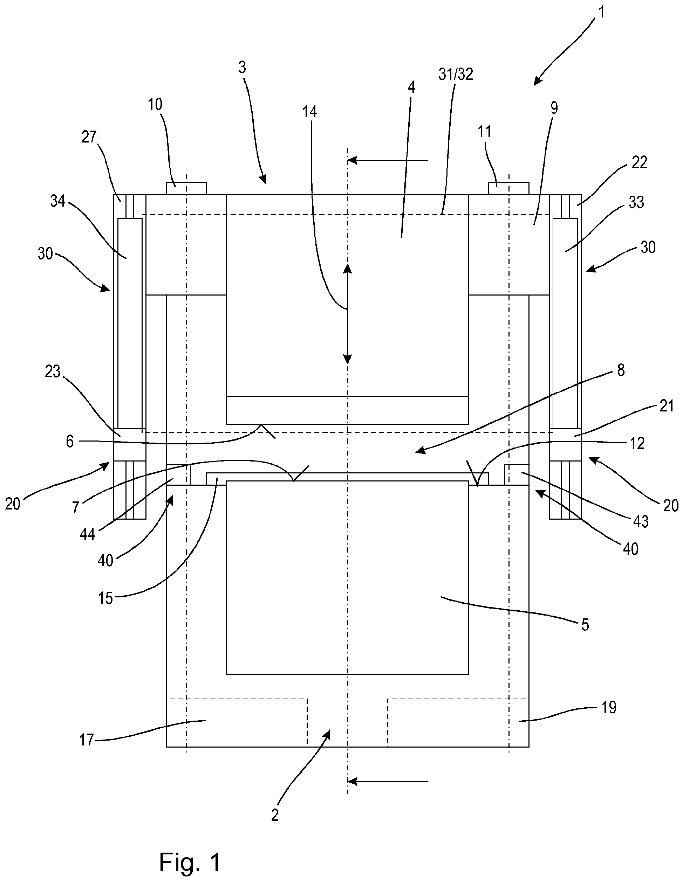

Eine in den Figuren 1 bis 3 rein schematisch dargestellte Deformationseinrichtung 1 umfasst einen Maschinenrahmen 2, an dem ein Werkzeugpaar 3 angeordnet ist. Die Deformationseinrichtung 1 ist rein exemplarisch als Abkantpresse ausgebildet und ermöglicht eine Deformation von Blechteilen, beispielhaft durch Abwinklung zwischen einem Oberwerkzeug 4 und einem Unterwerkzeug 5 des Werkzeugpaars 3. Exemplarisch ist sowohl das Oberwerkzeug 4 als auch das Unterwerkzeug 5 als Planparallelplatte ausgebildet, die an einander gegenüberliegenden Stirnflächen 6, 7 mit einer korrespondierenden Profilierung versehen sind. Die beiden Stirnflächen 6, 7 des Oberwerkzeugs 4 und des Unterwerkzeugs 5 begrenzen den Arbeitsspalt 8 des Werkzeugpaars 3. Beispielhaft ist vorgesehen, dass das Unterwerkzeug 5 ortsfest am Maschinenrahmen 2 festgelegt ist, während das Oberwerkzeug 4 beweglich am Maschinenrahmen 2 aufgenommen ist und hierzu mittels eines Werkzeughalters 9 an zwei höhenverstellbar am Maschinenrahmen 2 gelagerten Tragsäulen 10, 11 festgelegt ist. Beispielhaft handelt es sich bei den Tragsäulen 10, 11 um Kolbenstangen von Hydraulikzylindern, die im Maschinenrahmen 2 untergebracht sind und die eine Verstellung einer Vertikalposition des Oberwerkzeugs 4 längs eines Bewegungswegs 14 ermöglichen, der rein exemplarisch in vertikaler Richtung ausgerichtet ist. Bei einer nicht dargestellten Ausführungsform sind beide Werkzeuge höhenverstellbar ausgebildet. Bei einer ebenfalls nicht dargestellten Ausführungsform ist nur das Unterwerkzeug höhenverstellbar ausgebildet.

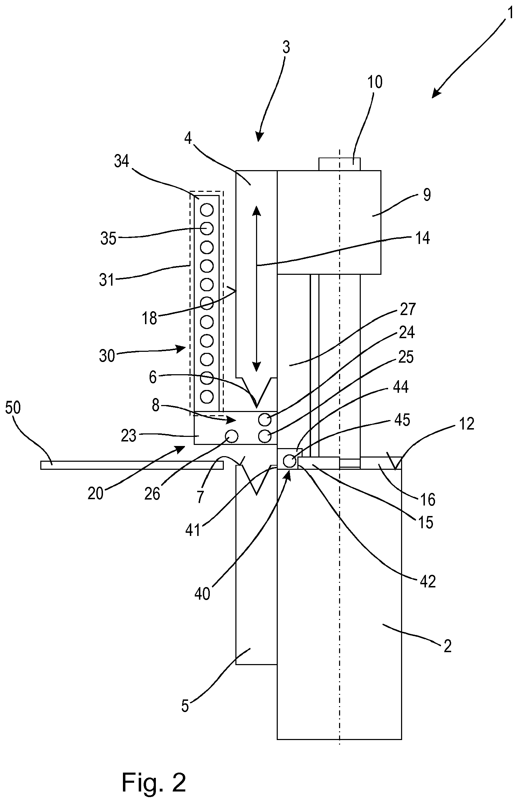

Wie aus der Darstellung der Figur 1 entnommen werden kann, sind das Oberwerkzeug 4 und das Unterwerkzeug 5 mit einer geringeren Breite als der Maschinenrahmen 2 ausgeführt. Ein an einer Oberseite 12 des Maschinenrahmens 2 angeordneter, rein exemplarisch dargestellter Werkstückanschlag 15 kann mit Hilfe eines kompakt ausgebildeten Hydraulikzylinders 16, der in der Figur 2 näher gezeigt ist, an den Arbeitsspalt 8 angenähert bzw. von diesem entfernt werden, um als Tiefenanschlag für ein Werkstück 50 zu dienen, wie es in der Figur 2 dargestellt ist.

Die Deformationseinrichtung 1 ist gemäß den Darstellungen der Figuren 1 und 2 mit insgesamt drei optischen Sicherungseinrichtungen 20, 30, 40 ausgestattet, die nachstehend näher erläutert werden. Jede der drei optischen Sicherungseinrichtungen 20, 30, 40 ist zur Überwachung eines vorgebbaren, insbesondere quaderförmigen, Raumabschnitts ausgebildet, in dem ein Eingreifen eines Benutzers zumindest während bestimmter Betriebsphasen der Deformationseinrichtung 1 zu einer Gefährdung des Benutzers führen würde.

Die erste optische Sicherungseinrichtung 20 ist zur Überwachung des Arbeitsspalts 8 ausgebildet und umfasst eine erste Strahlenquelle 21, die zur Bereitstellung von insgesamt drei nicht näher dargestellten Lichtstrahlen, insbesondere Laserstrahlen, ausgebildet ist. Die erste Strahlenquelle 21 ist an einer Stelleinrichtung 22 angekoppelt, die beispielhaft als nicht näher dargestellter, elektrisch betreibbare Gewindespindelantrieb ausgebildet ist und eine Veränderung einer vertikalen Positionierung der ersten Strahlenquelle 21 relativ zum Werkzeughalter 9 und den daran angebrachten Oberwerkzeug 4 ermöglicht. Da die Stelleinrichtung 22 mit dem Werkzeughalter 9 gekoppelt ist, vollzieht die erste Strahlenquelle 21 stets die Bewegung des Werkzeughalters 9, sofern nicht eine gleichsinnige oder gegensinnige Bewegungsüberlagerung durch eine entsprechende Ansteuerung der Stelleinrichtung 22 stattfindet. Die Stelleinrichtung 22 ist mit einer rein schematisch dargestellten Sicherheitssteuerung 17, die beispielhaft als separate Komponente ausgebildet ist, jedoch auch in der ersten optischen Sicherungseinrichtung 20 integriert sein kann, in nicht näher dargestellter Weise elektrisch verbunden, die für eine Positionierung der ersten Strahlenquelle 21 ausgebildet ist. Gegenüberliegend zur ersten Strahlenquelle 21 ist ein erster Lichtempfänger 23 angeordnet, der rein exemplarisch drei Sensorelemente 24, 25 und 26 umfasst. Jedes der Sensorelemente 24, 25 und 26 ist zum Empfang eines korrespondierenden, von der ersten Strahlenquelle 21 bereitgestellten und nicht näher dargestellten Lichtstrahls ausgebildet. Um stets eine Positionierung des ersten Lichtempfängers 23 gegenüberliegend zur ersten Strahlenquelle 21 zu gewährleisten ist der erste Lichtempfänger 23 in gleicher Weise wie die erste Strahlenquelle 21 an einer Stelleinrichtung 27 angebracht, die in nicht näher dargestellter Weise elektrisch mit der Sicherheitssteuerung 17 verbunden ist und von der Sicherheitssteuerung 17 synchron zur Stelleinrichtung 22 angesteuert werden kann. Ferner sind sowohl die erste Strahlenquelle 21 als auch der erste Lichtempfänger 23 elektrisch in nicht näher dargestellter Weise mit der Sicherheitssteuerung 17 verbunden, die einerseits eine selektive Ansteuerung der nicht näher dargestellten Lichtquellen der ersten Strahlenquelle 21 und andererseits eine Auswertung von Sensorsignalen der Sensorelemente 24, 25, 26 des ersten Lichtempfängers 23 vornimmt.

Die zweite optische Sicherungseinrichtung 30 ist zur Überwachung eines rein schematisch in der Figur 1 dargestellten Sicherheitsraums 31 vorgesehen, der eine quaderförmige Gestalt aufweist und der sich mit einer größten Oberfläche parallel zu einer Vorderseite 18 des Oberwerkzeugs 4 erstreckt. Dabei verläuft rein exemplarisch eine längste Kante 32 der größten Oberfläche des Sicherheitsraums 31 in horizontaler Richtung zwischen der zweiten Strahlenquelle 33 und dem zweiten Lichtempfänger 34, während sich eine Seitenkante der größten Oberfläche des Sicherheitsraums 31 in vertikaler Richtung parallel zum Bewegungsweg 14 erstreckt. Der in der Figur 2 dargestellte zweite Lichtempfänger 34 grenzt an eine Schmalseite des Sicherheitsraums 31, deren Oberfläche von der Seitenkante des Sicherheitsraums 31 sowie von einer horizontal verlaufenden Oberkante sowie einer horizontal verlaufenden Unterkante des Sicherheitsraums 31 begrenzt wird.

Die zweite Strahlenquelle 33 ist zur Bereitstellung eines Lichtgitters oder Lichtvorhangs in Richtung des zweiten Lichtempfängers 34 ausgebildet. Die Lichtstrahlen der zweiten Strahlenquelle 33 durchsetzen den Sicherheitsraum 31 derart, dass für jeden Raumvolumenabschnitt des Sicherheitsraums 31 gewährleistet ist, dass ein Eindringen eines Fingers oder einer Hand eines Benutzers eine Abschwächung der von den zeilenartig angeordneten Sensorelementen 35 des zweiten Lichtempfängers empfangenen Lichtstrahlen bewirkt, die sich in einem signifikant veränderten Sensorsignal des Lichtempfängers 34 bemerkbar macht. Für eine Auswertung des Sensorsignals ist der zweite Lichtempfänger 34 mit der Sicherheitssteuerung 17 in nicht näher dargestellter Weise elektrisch verbunden. Ferner ist auch die zweite Strahlenquelle 33 mit der Sicherheitssteuerung 17 in nicht näher dargestellter Weise elektrisch verbunden, um eine selektive Bereitstellung oder Abschaltung der Lichtstrahlen, die den Sicherheitsraum 31 durchsetzen sollen, zu ermöglichen.

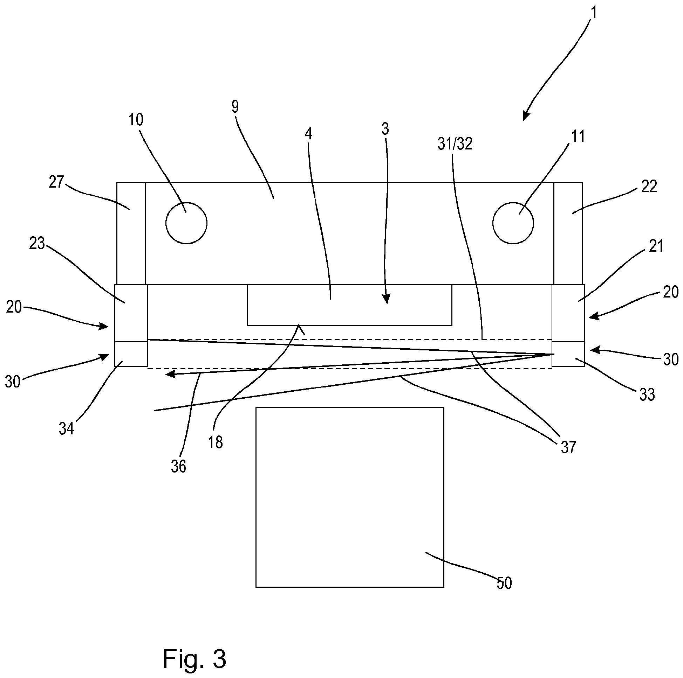

Wie aus der Darstellung der Figur 3 entnommen werden kann, ist eine optische Achse 36 der zweiten Strahlenquelle 33 in einem spitzen Winkel zu einem Abstand zwischen zweiter Strahlenquelle 33 und zweitem Lichtempfänger 34 ausgerichtet, um Reflektionen von Randlichtstrahlen 37 an der Vorderseite 18 des Oberwerkzeugs 4 zu vermeiden.

Bei der in den Figuren 1 bis 3 dargestellten Ausführungsform der Deformationseinrichtung 1 ist rein exemplarisch eine dritte optische Sicherungseinrichtung 40 zur Absicherung eines Raumbereichs zwischen einer Rückseite oder Hinterkante 41 des Unterwerkzeugs 5 und einer Vorderseite oder Vorderkante 42 des Werkstückanschlags 15 vorgesehen. Die dritte optische Sicherungseinrichtung 40 umfasst eine dritte Strahlenquelle 43 sowie einen dritten Lichtempfänger 44, die gegenüberliegend zueinander ortsfest am Maschinenrahmen 2 angeordnet sind. Dabei ist die dritte Strahlenquelle 43 zur Bereitstellung eines nicht näher dargestellten Lichtstrahls, insbesondere Laserstrahls, ausgebildet, der parallel zur Stirnfläche 7 des Unterwerkzeugs 5 ausgerichtet ist und der auf ein Sensorelement 45 des dritten Lichtempfängers 44 auftrifft, sofern kein Hindernis zwischen der dritten Strahlungsquelle 43 und dem dritten Lichtempfänger 44 angeordnet ist. Die dritte Strahlungsquelle 43 und der dritte Lichtempfänger 44 sind elektrisch in nicht näher dargestellter Weise mit der Sicherheitssteuerung 17 verbunden, die für eine wahlweise Aktivierung und Deaktivierung der dritten Strahlungsquelle und für eine Verarbeitung des vom dritten Lichtempfänger 44 bereitgestellten Sensorsignals ausgebildet ist. Sofern bei aktivierter dritter Strahlungsquelle 43 eine Unterbrechung des optischen Pfads zwischen der dritten Strahlungsquelle 43 und dem dritten Lichtempfänger 44 vorliegt, stellt der dritte Lichtempfänger 44 nicht das Sensorsignal bereit, das ohne eine Unterbrechung des optischen Pfads auftreten müsste. Dadurch erkennt die Sicherheitssteuerung 17 eine Abweichung zwischen einem Sollwert für das Sensorsignal und dem Istwert des Sensorsignals und muss daher von einer Gefährdung eines Benutzers ausgehen, so dass zur Beseitigung des Gefährdungspotenzials eine Abschaltung der hydraulischen Versorgung für den Hydraulikzylinder 16 und vorzugsweise auch eine Abschaltung einer hydraulischen Versorgung für die Bewegung der Tragsäulen 10, 11 vorgenommen wird.

Für einen Betrieb der Deformationseinrichtung 1 kann folgende Vorgehensweise vorgesehen werden: zunächst erfolgt eine Programmierung der Deformationseinrichtung 1 mit einer speicherprogrammierbaren Steuerung (SPS) 19, die elektrisch in nicht näher dargestellter Weise mit der Sicherheitssteuerung 17 verbunden ist und die ein nicht näher dargestelltes Eingabemittel, beispielsweise eine Tastatur, zur Eingabe von Programmierbefehlen umfasst. Im Zuge der Programmierung des Deformationswerkzeugs 1 kann beispielsweise festgelegt werden, bis zu welchem Abstand das Oberwerkzeug 4 an das Unterwerkzeug 5 angenähert werden soll, um das zwischen den beiden Werkzeugen 4, 5 aufzunehmende Werkstück 50 in der gewünschten Weise zu deformieren. Ferner wird im Zuge der Programmierung auch eine Positionierung für den Werkstückanschlag 15 festgelegt, die anschließend beim Betrieb der Deformationseinrichtung 1 mit Hilfe der Steuerung 19 und des Hydraulikzylinders 16 eingestellt wird. Bei diesem Einstellvorgang erfolgt eine Aktivierung der dritten Strahlenquelle 43 durch die Sicherheitssteuerung 17 sowie eine Verarbeitung des Sensorsignals des dritten Lichtempfängers 44 durch die Sicherheitssteuerung 17, um bei einer Unterbrechung des optischen Pfads zwischen der dritten Strahlenquelle 43 und dem dritten Lichtempfänger 44 eine Abschaltung der hydraulischen Versorgung für den Hydraulikzylinder 16 vornehmen zu können und damit ein Gefahrenpotenzial für einen Benutzer zu beseitigen.

Nach erfolgreicher Positionierung des Werkstückanschlags 15 wird die dritte Strahlenquelle 43 deaktiviert und es erfolgt keine weitere Verarbeitung des Sensorsignals des dritten Lichtempfängers 44 in der Sicherheitssteuerung 17.

Da im Zuge der Programmierung der Steuerung 19 auch Festlegungen hinsichtlich des Oberwerkzeugs 4 und des Unterwerkzeugs 5 getroffen wurden, kann die Sicherheitssteuerung 17 eine Position der beiden mit der Stelleinrichtung 22 gekoppelten optischen Sicherungseinrichtungen 20 und 30 einstellen, damit sich diese für den nachfolgenden Bearbeitungsvorgang in einer günstigen Position befinden.

In einem nachfolgenden Schritt kann nunmehr die Zuführung des Werkstücks 50 durch einen nicht dargestellten Bediener erfolgen. Exemplarisch ist vorgesehen, dass der Bediener das plattenförmig ausgebildete Werkstück 50 in horizontaler Richtung in den Arbeitsspalt 8 einschiebt, wobei das Werkstück 50 auf die Stirnfläche 7 des Unterwerkzeugs 5 aufgelegt wird und so lange in horizontaler Richtung in Richtung des Werkstückanschlags 15 in den Arbeitsspalt 8 eingeschoben wird, bis eine Stirnfläche des Werkstücks 50 am Werkstückanschlag 15 anliegt.

Anschließend kann der Benutzer beispielsweise durch Verwendung eines nicht dargestellten Fußtasters eine Annäherungsbewegung des Oberwerkzeugs 4 an das Unterwerkzeug 5 unter Verringerung des Arbeitsspalts 8 bewirken. Hierbei wird von der Steuerung 19 unter Zwischenschaltung der Sicherheitssteuerung 17 eine Versorgung des nicht näher dargestellten Stellantriebs für die Tragsäulen 10, 11 und das damit gekoppelte Oberwerkzeug 4 vorgenommen, um eine lineare Bewegung des Oberwerkzeugs 4 längs des Bewegungswegs 14 in Richtung des Unterwerkzeugs 5 zu bewirken. In dieser Phase bewegen sich die beiden optischen Sicherungseinrichtungen 20 und 30 synchron zum Oberwerkzeug 4, wobei mit Hilfe der ersten optischen Sicherungseinrichtung 20 in bekannter Weise eine Absicherung des Arbeitsspalts 8 erfolgt und bei Annäherung des Oberwerkzeugs 4 an das Unterwerkzeug 4 nach und nach eine Abschaltung der einzelnen Lichtquellen der ersten Strahlenquelle 21 sowie eine Ausblendung von Sensorsignalen der zugeordneten Sensorelemente 24, 25, 26 des ersten Lichtempfängers 23 in der Sicherheitssteuerung 17 erfolgt.

Exemplarisch kann vorgesehen sein, dass während der Annäherung des Oberwerkzeugs 4 an das Unterwerkzeug 5 keine Aktivierung der zweiten optischen Sicherungseinrichtung 30 erfolgt und diese Aktivierung erst dann vorgenommen wird, wenn das Werkstück 50 zwischen Oberwerkzeug 4 und Unterwerkzeug 5 geklemmt wird, ohne dass bereits eine Deformation des Werkstücks 50 eingetreten ist.

Jedenfalls ist vorgesehen, eine Aktivierung der zweiten optischen Sicherungseinrichtung 30 durch die Sicherheitssteuerung 17 vorzunehmen, sobald das Werkstück 50 zwischen dem Oberwerkzeug 4 und dem Unterwerkzeug 5 geklemmt ist und der Deformationsvorgang beginnt. Bei der Aktivierung der zweiten optischen Sicherungseinrichtung 30 werden Lichtstrahlen von der zweiten Strahlenquelle 33 derart abgegeben, dass diese den Sicherheitsraum 31 vollständig erfüllen und auf die Sensorelemente 35 des zweiten Lichtempfängers 34 auftreffen. Hierbei ist die Sicherheitssteuerung 17 für eine Auswertung eines Sensorsignals des zweiten Lichtempfänger 34 derart ausgebildet, dass Abweichungen des Sensorsignals, die einen vorgebbaren Schwellwert überschreiten, zu einer Abschaltung einer Energieversorgung durch die Sicherheitssteuerung 17 führen, um eine Weiterbewegung des Oberwerkzeugs 4 zu verhindern. Vorzugsweise ist eine Empfindlichkeit der Sicherheitssteuerung 17 für die Sensorsignale des zweiten Lichtempfängers 34 derart eingestellt, dass eine Unterscheidung zwischen einem im Rahmen des Deformationsvorgangs in den Sicherheitsraum 31 einschränkenden Werkstücks und einem manuellen Eingriff eines Benutzers in den Schutzraum 31 gewährleistet werden kann und eine Abschaltung der Bewegung des Oberwerkzeugs 4 nur im letzteren Fall vorgenommen wird.

Gegebenenfalls kann zusätzlich vorgesehen sein, den Verbund aus den beiden optischen Sicherungseinrichtungen 20 und 30 mit Hilfe der zugeordneten Stelleinrichtungen 22, 27 aus derjenigen Position, die während der Annäherung des Oberwerkzeugs 4 an das Unterwerkzeug 5 bis zum Klemmen des Werkstücks 50 eingenommen wurde, während des weiteren Deformationsvorgangs für das Werkstück 50 beispielsweise in vertikaler Richtung nach oben und somit gegen die Schließrichtung des Oberwerkzeugs 4 zu verlagern, um eine zuverlässige Überwachung eines höher gelegenen Sicherheitsraums 31 zu ermöglichen.

## Patentansprüche

1. Deformationseinrichtung mit einem Maschinenrahmen (2), an dem ein Werkzeugpaar (3) angeordnet ist, wobei wenigstens eines der Werkzeuge (4, 5) längs eines Bewegungswegs (14) relativbeweglich am Maschinenrahmen (2) angeordnet ist und gegenüberliegend angeordnete Stirnflächen (6, 7) der Werkzeuge (4, 5) einen größenvariablen Arbeitsspalt (8) ausbilden und wobei dem einen, insbesondere dem beweglichen, Werkzeug (4) eine erste optische Sicherungseinrichtung (20) zugeordnet ist, die für eine Absicherung des Arbeitsspalts (8) eine erste Strahlenquelle (21) zur Bereitstellung eines ersten Strahlenbündels parallel zu den Stirnflächen (6, 7) der Werkzeuge (4, 5) und einen ersten Lichtempfänger (23) zum Empfang des ersten Strahlenbündels umfasst, wobei einem der Werkzeuge (4, 5), insbesondere dem beweglichen Werkzeug (4), eine zweite optische Sicherungseinrichtung (30) zugeordnet ist, die eine zweite Strahlenquelle (33) zur Bereitstellung eines zweiten Strahlenbündels und einen zweiten Lichtempfänger (34) zum Empfang des zweiten Strahlenbündels zur Absicherung einer normal zum Bewegungsweg (14) ausgerichteten, an die Stirnfläche (6, 7) anschließende Seitenfläche (18, 41) des Werkzeugs (4, 5) umfasst, **dadurch gekennzeichnet, dass** die zweite optische Sicherungseinrichtung (30) gemeinsam mit der ersten optischen Sicherungseinrichtung (20) längs des Bewegungswegs (14) verstellbar am Maschinenrahmen (2) oder am beweglichen Werkzeug (4) angeordnet ist und für eine Absicherung einer benutzerzugewandten Vorderseite (18) des Werkzeugs (4, 5), insbesondere des beweglichen Werkzeugs (4), ausgebildet ist und dass die zweite Strahlenquelle (33) zur Bereitstellung von Strahlen zumindest in einem Sicherungsraum (31) mit quaderförmiger Erstreckung ausgebildet ist, dessen größte Oberfläche in einen vorgebbaren Abstand zur Vorderseite (18) des Werkzeugs (4, 5) angeordnet ist und dass die zweite Strahlenquelle (33) und der zweite Lichtempfänger (34) an gegenüberliegenden Schmalseiten des Sicherungsraums (31) angeordnet sind.

2. Deformationseinrichtung nach Anspruch 1, **dadurch gekennzeichnet, dass** die erste optische Sicherungseinrichtung (20) und die zweite optische Sicherungseinrichtung (30) gemeinsam mit einer Antriebseinrichtung (22, 27) gekoppelt sind, die für eine relativbewegliche Lagerung der beiden optischen Sicherungseinrichtungen (20, 30) am Maschinenrahmen (2) oder am beweglichen Werkzeug (4), ausgebildet ist.

3. Deformationseinrichtung nach Anspruch 2, **dadurch gekennzeichnet, dass** die Antriebseinrichtung (22, 27) für die beiden optischen Sicherungseinrichtungen (20, 30) aus der Gruppe: elektrischer Linearsteller, insbesondere Gewindespindelantrieb, pneumatischer Linearsteller, insbesondere Pneumatikzylinder, hydraulischer Linearsteller, insbesondere Hydraulikzylinder, ausgebildet ist.

4. Deformationseinrichtung nach einem der Ansprüche 1 bis 3, **dadurch gekennzeichnet, dass** eine optische Achse (36) der zweiten Strahlenquelle (33) derart um eine parallel zum Bewegungsweg (14) ausgerichtete Schwenkachse verschwenkt ist, dass die optische Achse (36) einen vorgebbaren Winkel mit der Vorderseite (18) des beweglichen Werkzeugs (4) einnimmt.

5. Deformationseinrichtung mit einem Maschinenrahmen (2), an dem ein Werkzeugpaar (3) angeordnet ist, wobei wenigstens eines der Werkzeuge (4, 5) längs eines Bewegungswegs (14) relativbeweglich am Maschinenrahmen (2) angeordnet ist und gegenüberliegend angeordnete Stirnflächen (6, 7) der Werkzeuge (4, 5) einen größenvariablen Arbeitsspalt (8) ausbilden und wobei dem einen, insbesondere dem beweglichen, Werkzeug (4) eine erste optische Sicherungseinrichtung (20) zugeordnet ist, die für eine Absicherung des Arbeitsspalts (8) eine erste Strahlenquelle (21) zur Bereitstellung eines ersten Strahlenbündels parallel zu den Stirnflächen (6, 7) der Werkzeuge (4, 5) und einen ersten Lichtempfänger (23) zum Empfang des ersten Strahlenbündels umfasst, wobei einem der Werkzeuge (4, 5) eine weitere optische Sicherungseinrichtung (40) zugeordnet ist, die eine weitere Strahlenquelle (43) zur Bereitstellung eines weiteren Strahlenbündels und einen weiteren Lichtempfänger (44) zum Empfang des weiteren Strahlenbündels umfasst und die zur Absicherung eines Raumabschnitts, der sich zwischen einer Rückseite (41) eines unteren Werkzeugs (5) und einer Vorderseite (42) eines Werkstückanschlags (15) erstreckt, ausgebildet ist, wobei die weitere optische Sicherungseinrichtung (40) dem unteren Werkzeug (5) zugeordnet ist und wobei die weitere Strahlenquelle (43) und der weitere Lichtempfänger (44) gegenüberliegend zueinander ortsfest am Maschinenrahmen (2) angeordnet sind.

6. Deformationseinrichtung nach einem der Ansprüche 1 bis 4, **dadurch gekennzeichnet, dass** die erste optische Sicherungseinrichtung (20) und die zweite optische Sicherungseinrichtung (30) mit einer Sicherheitssteuerung (17) verbunden sind, die zur Bereitstellung von Antriebsenergie an einen Werkzeugantrieb in Abhängigkeit von Sensorsignalen der beiden Sicherungseinrichtungen (20, 30) ausgebildet ist, wobei der Werkzeugantrieb für eine Bereitstellung einer Arbeitsbewegung für das bewegliche Werkzeug (4) ausgebildet ist.

7. Deformationseinrichtung nach Anspruch 6, **dadurch gekennzeichnet, dass** die Sicherheitssteuerung (17) für die Ansteuerung der beiden Sicherungseinrichtungen (20, 30) gemäß einer vorgebbaren zeitlichen Abfolge, vorzugsweise mit aufeinanderfolgenden, insbesondere sich teilweise überschneidenden zeitlichen Intervallen, ausgebildet ist.

8. Deformationseinrichtung nach einem der Ansprüche 6 oder 7, **dadurch gekennzeichnet, dass** der zweite Lichtempfänger (34) mehrere, insbesondere längs des Bewegungswegs (14) aneinandergereihte, lichtempfindliche Sensorelemente (35) umfasst und dass die Sicherheitssteuerung (17) für eine Unterscheidung von Unterbrechungen des Strahlenbündels anhand von vorgebbaren Unterbrechungskriterien ausgebildet ist.

9. Deformationseinrichtung nach Anspruch 5, **dadurch gekennzeichnet, dass** eine Sicherheitssteuerung (17) mit einer Antriebseinrichtung (16) für einen Werkstückanschlag (15) verbunden ist und zur Bereitstellung von Antriebsenergie an die Antriebseinrichtung (16) in Abhängigkeit von Sensorsignalen der weiteren Sicherungseinrichtung (40) ausgebildet ist, wobei die Antriebseinrichtung (16) für eine Bereitstellung einer Einstellbewegung des Werkstückanschlags (15) gegenüber einer benutzerabgewandten Rückseite (41) eines unteren Werkzeugs (5) ausgebildet ist.

10. Verfahren zum Betreiben einer Deformationseinrichtung, mit den Schritten: Bewegen eines ersten, beweglich an einem Maschinenrahmen (2) angeordneten Werkzeugs (4) längs eines Bewegungswegs (14) in Richtung eines zweiten, starr am Maschinenrahmen (2) angeordneten Werkzeugs (5) zur Verkleinerung eines von gegenüberliegend angeordneten Stirnflächen (6, 7) der Werkzeuge (4, 5) begrenzten größenvariablen Arbeitsspalts (8), Überwachung des Arbeitsspalts (8) mit einer ersten optischen Sicherungseinrichtung (20), die ein erstes Strahlenbündel bereitstellt, das parallel zu den Stirnflächen (6, 7) der Werkzeuge (4, 5) ausgerichtet ist und das von einem ersten Lichtempfänger (23) erfasst wird, Überwachung eines Sicherungsraums (31), der einer Seitenfläche (18) eines Werkzeugs (4) vorgelagert ist, mit einer zweiten optischen Sicherungseinrichtung (30), die ein Strahlenbündel bereitstellt, das den Sicherungsraum (31) durchsetzt, das von einem zweiten Lichtempfänger (34) erfasst wird, wobei die beiden Lichtempfänger (23, 34) jeweils ein Sensorsignal an eine Sicherheitssteuerung (17) bereitstellen, die eine Bereitstellung von Antriebsenergie an einen Werkzeugantrieb, der für eine Bereitstellung einer Arbeitsbewegung für das bewegliche Werkzeug (4) ausgebildet ist, unterbricht, wenn eine Unterbrechung des jeweiligen Strahlenbündels eine Änderung des jeweiligen Sensorsignals bewirkt, die größer als ein vorgebbarer Schwellwert ist, **dadurch gekennzeichnet, dass** sich die erste optische Sicherungseinrichtung (20) und die zweite optische Sicherungseinrichtung (30) synchron zu dem beweglich am Maschinenrahmen (2) angeordneten Werkzeug (4) bewegen.

11. Verfahren nach Anspruch 10, **dadurch gekennzeichnet, dass** eine zumindest teilweise Deaktivierung der zweiten optischen Sicherungseinrichtung (30) erfolgt, wenn ein Abstand zwischen den Stirnflächen (6, 7) der Werkzeuge (4, 5) einen vorgebbaren Abstandswert unterschreitet.

12. Verfahren nach Anspruch 10, **dadurch gekennzeichnet, dass** eine zumindest teilweise Aktivierung der zweiten optischen Sicherungseinrichtung (30) erfolgt, wenn ein Abstand zwischen den Stirnflächen (6, 7) der Werkzeuge (4, 5) einen vorgebbaren Abstandswert unterschreitet.

13. Verfahren nach Anspruch 10, 11 oder 12, **dadurch gekennzeichnet, dass** die Sicherheitssteuerung (17) die Bereitstellung von Antriebsenergie an den Werkzeugantrieb und/oder an eine Antriebseinrichtung (16) für einen Werkstückanschlag (15) unterbricht, wenn anhand einer zumindest teilweisen Unterbrechung des jeweiligen Strahlenbündels ein Eingriff eines Benutzers in einem vom jeweiligen Strahlenbündel abgesicherten Raumbereich ermittelt wird, insbesondere eine Änderung des Sensorsignals des jeweiligen Lichtsensors (23, 34, 44) um einen vorgebbaren Wert vorliegt.

## Claims

1. Deformation device with a machine frame (2) on which a pair of tools (3) is arranged, wherein at least one of the tools (4, 5) is arranged on the machine frame (2) so as to be relatively movable along a movement path (14) and wherein end surfaces (6, 7) of the tools (4, 5) arranged opposite each other form a size-variable working gap (8) and wherein a first optical safety device (20) is assigned to one of the tools (4, 5), in particular to the movable tool (4), to secure the working gap (8), wherein said first optical safety device (20) comprises a first beam source (21) to provide a first beam bundle parallel to the end surfaces (6, 7) of the tools (4, 5) and a first light receiver (23) to receive the first beam bundle, wherein a second optical safety device (30) is assigned to one of the tools (4, 5), in particular to the movable tool (4), wherein said second safety device (30) comprises a second beam source (33) to provide a second beam bundle and a second light receiver (34) to receive the second beam bundle to secure a side surface (18, 41) of the tool (4, 5) aligned normal to the movement path (14) and bordering on the end surface (6, 7), **characterised in that** the second optical safety device (30) is arranged on the machine frame (2) or on the movable tool (4) together with the first optical safety device (20) and **in that** the optical safety devices (20, 30) are adjustable together along the movement path (14), wherein the second optical safety device (30) is designed for securing a front side (18) of the tool (4, 5) facing the user, in particular the movable tool (4) and **in that** the second beam source (33) is designed to provide beams at least in a safety area (31) having a box-shaped extension whose largest surface is arranged at a predefinable distance to the front side (18) of the tool (4, 5) and **in that** the second beam source (33) and the second light receiver (34) are arranged at opposing narrows sides of the safety area (31).

2. Deformation device according to claim 1, **characterised in that** the first optical safety device (20) and the second optical safety device (30) are coupled together with a drive device (22, 27), which is designed for a movable mounting of the two optical safety devices (20, 30) on the machine frame (2) or on the movable tool (4).

3. Deformation device according to claim 2, **characterised in that** the drive device (22, 27) for the two optical safety devices (20, 30) is chosen from the group of: electric linear actuator, in particular thread spindle drive, pneumatic linear actuator, in particular pneumatic cylinder, hydraulic linear actuator, in particular hydraulic cylinder.

4. Deformation device according to any one of claims 1 to 3, **characterised in that** an optical axis (36) of the second beam source (33) is pivoted around a pivot axis aligned parallel to the movement path (14) such that the optical axis (36) adopts a predefinable angle with the front side (18) of the movable tool (4).

5. Deformation device with a machine frame (2) on which a pair of tools (3) is arranged, wherein at least one of the tools (4, 5) is arranged on the machine frame (2) so as to be relatively movable along a movement path (14) and wherein end surfaces (6, 7) of the tools (4, 5) arranged opposite each other form a size-variable working gap (8) and wherein a first optical safety device (20) is assigned to one of the tools (4, 5), in particular to the movable tool (4), to secure the working gap (8), wherein said safety first optical device (20) comprises a first beam source (21) to provide a first beam bundle parallel to the end surfaces (6, 7) of the tools (4, 5) and a first light receiver (23) to receive the first beam bundle, wherein a further optical safety device (40) is assigned to one of the tools (4, 5), wherein said further safety device (40) comprises a further beam source (33) to provide a further beam bundle and a further light receiver (34) to receive the further beam bundle to secure a space region between a rear side (41) of a lower tool (5) and a front side (42) of a workpiece stop (15), wherein the further optical safety device (40) is assigned the lower tool (5) and wherein the further beam source (33) and the further light receiver (34) are fixedly arranged on the machine frame (2) facing each other.

6. Deformation device according to claims 1 to 4, **characterised in that** the first optical safety device (20) and the second optical safety device (30) are connected with a safety controller (17) which is designed to provide drive energy to a tool drive as a function of sensor signals of the two safety devices (20, 30) wherein the tool drive is designed to provide a working movement for the movable tool (4).

7. Deformation device according to claim 6, **characterised in that** the safety controller (17) is designed to actuate the two safety devices (20, 30) according to a predefinable time sequence, preferably at sequential, in particular partially overlapping time intervals.

8. Deformation according to any one of claims 6 or 7, **characterised in that** the second light receiver (34) comprises a plurality of light-sensitive sensor elements (35), in particular in a row along the movement path (14), and **in that** the safety controller (17) is designed to distinguish interruptions of the beam bundle based on predefinable interruption criteria.

9. Deformation according to claim 5, **characterised in that** a safety controller (17) is connected to a drive device (16) for a workpiece stop (15) and is designed to provide drive energy to the drive device (16) as a function of sensor signals of the further safety device (40) wherein the drive device (16) is designed to provide an actuating movement of the workpiece stop (15) with respect to a rear side (41) of a lower tool (5) facing away from the user.

10. Method for operating a deformation device, with the steps: moving a first tool (4) arranged movably on a machine frame (2) along a movement path (14) in the direction of a second tool (5) arranged rigidly on the machine frame (2) to reduce a size-variable working gap (8) delimited by opposingly arranged end surfaces (6, 7) of the tools (4, 5), monitoring the working gap (8) with a first optical safety device (20) which provides a first beam bundle which is aligned parallel to the end surfaces (6, 7) of the tools (4, 5) and which is detected by a first light receiver (23), monitoring a safety area (31) located at a distance to a side surface (18) of a tool (4), with a second optical safety device (30) which provides a beam bundle which establishes the safety area (31) which is detected by a second light receiver (34) wherein the two light receivers (23, 34) each provide a sensor signal to a safety controller (17) which interrupts the provision of drive energy to a tool drive which is designed to provide a working movement for the movable tool (4) when an interruption of the respective beam bundle causes a change of the respective sensor signal which is larger than a predefinable threshold value, **characterised in that** the first optical safety device (20) and the second optical safety device (30) move synchronously to the first tool (4) arranged movably on the machine frame (2).

11. Method according to claim 10, **characterised in that** the second optical safety device (30) is at least partially deactivated when a distance between the end surfaces (6, 7) of the tools (4, 5) falls short of a predefinable distance value.

12. Method according to claim 10, **characterised in that** the second optical safety device (30) is at least partially activated when a distance between the end surfaces (6, 7) of the tools (4, 5) becomes smaller than a predefinable distance value.

13. Method according to claim 10, 11 or 12, **characterised in that** the safety controller (17) interrupts the provision of drive energy to the tool drive and/or to a drive device (16) for a workpiece stop (15) when a user is detected entering a space portion secured by the respective beam bundle based on an at least partial interruption of the respective beam bundle, in particular a change of the sensor signal of the respective light sensor (23, 34, 44) by a predefinable value.

## Revendications

1. Dispositif de déformation avec un bâti de machine (2), au niveau duquel une paire d'outils (3) est agencée, dans lequel au moins un des outils (4, 5) est agencé de manière relativement mobile le long d'un trajet de déplacement (14) au niveau du bâti de machine (2) et des surfaces frontales (6, 7) des outils (4, 5) agencées à l'opposé forment une fente de travail de taille variable (8) et dans lequel à l'un outil (4), en particulier celui mobile, est associé un premier dispositif de sécurité optique (20) qui comprend pour une sécurisation de la fente de travail (8) une première source de rayonnement (21) pour la fourniture d'un premier faisceau de rayons parallèlement aux surfaces frontales (6, 7) des outils (4, 5) et un premier récepteur de lumière (23) pour la réception du premier faisceau de rayons, dans lequel à un des outils (4, 5), en particulier à l'outil mobile (4), est associé un second dispositif de sécurité optique (30) qui comprend une seconde source de rayonnement (33) pour la fourniture d'un second faisceau de rayons et un second récepteur de lumière (34) pour la réception du second faisceau de rayons pour la sécurisation d'une surface latérale (18, 41) de l'outil (4, 5) orientée normalement au trajet de déplacement (14) se raccordant à la surface frontale (6, 7), **caractérisé en ce que** le second dispositif de sécurité optique (30) est agencé conjointement avec le premier dispositif de sécurité optique (20) le long du trajet de déplacement (14) de manière réglable au niveau du bâti de machine (2) ou au niveau de l'outil mobile (4) et est réalisé pour une sécurisation d'un côté avant tourné vers l'utilisateur (18) de l'outil (4, 5), en particulier l'outil mobile (4), et que la seconde source de rayonnement (33) est réalisée pour la fourniture de rayons au moins dans un espace de sécurité (31) avec extension parallélépipédique, dont la plus grande surface est agencée à une distance prédéfinissable par rapport au côté avant (18) de l'outil (4, 5) et que la seconde source de rayonnement (33) et le second récepteur de lumière (34) sont agencés au niveau de côtés étroits opposés de l'espace de sécurité (31).

2. Dispositif de déformation selon la revendication 1, **caractérisé en ce que** le premier dispositif de sécurité optique (20) et le second dispositif de sécurité optique (30) sont couplés conjointement avec un dispositif d'entraînement (22, 27), qui est réalisé pour un stockage relativement mobile des deux dispositifs de sécurité optiques (20, 30) au niveau du cadre de machine (2) ou au niveau de l'outil mobile (4).

3. Dispositif de déformation selon la revendication 2, **caractérisé en ce que** le dispositif d'entraînement (22, 27) pour les deux dispositifs de sécurité optiques (20, 30) est réalisé dans le groupe : actionneur linéaire électrique, en particulier entraînement par broche filetée, actionneur linéaire pneumatique, en particulier cylindre pneumatique, actionneur linéaire hydraulique, en particulier cylindre hydraulique.

4. Dispositif de déformation selon l'une quelconque des revendications 1 à 3, **caractérisé en ce qu'**un axe optique (36) de la seconde source de rayonnement (33) est basculé autour d'un axe de pivotement orienté parallèlement au trajet de déplacement (14) de sorte que l'axe optique (36) adopte un angle prédéfinissable avec le côté avant (18) de l'outil mobile (4).

5. Dispositif de déformation avec un bâti de machine (2), au niveau duquel une paire d'outils (3) est agencée, dans lequel au moins un des outils (4, 5) est agencé de manière relativement mobile le long d'un trajet de déplacement (14) au niveau du bâti de machine (2) et des surfaces frontales (6, 7) des outils (4, 5) agencées à l'opposé forment une fente de travail de taille variable (8) et dans lequel à l'un outil (4), en particulier celui mobile, est associé un premier dispositif de sécurité optique (20), qui comprend pour une sécurisation de la fente de travail (8) une première source de rayonnement (21) pour la fourniture d'un premier faisceau de rayons parallèlement aux surfaces frontales (6, 7) des outils (4, 5) et un premier récepteur de lumière (23) pour la réception du premier faisceau de rayons, dans lequel à un des outils (4, 5) est associé un autre dispositif de sécurité optique (40), qui comprend une autre source de rayonnement (43) pour la fourniture d'un autre faisceau de rayons et un autre récepteur de lumière (44) pour la réception de l'autre faisceau de rayons et qui est réalisé pour la sécurisation d'une section d'espace, qui s'étend entre un côté arrière (41) d'un outil inférieur (5) et un côté avant (42) d'une butée d'outil (15), dans lequel l'autre dispositif de sécurité optique (40) est associé à l'outil inférieur (5) et dans lequel l'autre source de rayonnement (43) et l'autre récepteur de lumière (44) sont agencés de manière stationnaire opposés l'un à l'autre au niveau du bâti de machine (2).

6. Dispositif de déformation selon l'une quelconque des revendications 1 à 4, **caractérisé en ce que** le premier dispositif de sécurité optique (20) et le second dispositif de sécurité optique (30) sont reliés à une commande de sécurité (17), qui est réalisée pour la fourniture d'énergie d'entraînement à un entraînement d'outil en fonction de signaux de capteur des deux dispositifs de sécurité optiques (20, 30), dans lequel l'entraînement d'outil est réalisé pour permettre un déplacement de travail pour l'outil mobile (4).

7. Dispositif de déformation selon la revendication 6, **caractérisé en ce que** la commande de sécurité (17) est réalisée pour la commande des deux dispositifs de sécurité optiques (20, 30) conformément à un ordre chronologique prédéfinissable, de préférence avec des intervalles temporels successifs, en particulier se chevauchant en partie.

8. Dispositif de déformation selon l'une quelconque des revendications 6 ou 7, **caractérisé en ce que** le second récepteur de lumière (34) comprend plusieurs éléments capteurs (35) sensibles à la lumière, alignés en particulier le long du trajet de déplacement (14) et que la commande de sécurité (17) est réalisée pour une différenciation d'interruptions du faisceau de rayons à l'aide de critères d'interruption prédéfinissables.

9. Dispositif de déformation selon la revendication 5, **caractérisé en ce qu'**une commande de sécurité (17) est reliée à un dispositif d'entraînement (16) pour une butée de pièce (15) et est réalisée pour la fourniture d'énergie d'entraînement au dispositif entraînement (16) en fonction de signaux de capteur de l'autre dispositif de sécurité (40), dans lequel le dispositif entraînement (16) est réalisé pour permettre un déplacement de réglage de la butée de pièce (15) par rapport au côté arrière (41) d'un outil inférieur (5) opposé à l'utilisateur.

10. Procédé de fonctionnement d'un dispositif de déformation, avec les étapes de : déplacement d'un premier outil (4) agencé de manière mobile au niveau d'un bâti de machine (2) le long d'un trajet de déplacement (14) en direction d'un second outil (5) agencé de manière immobile au niveau d'un bâti de machine (2) pour la réduction d'une fente de travail de taille variable (8) délimitée par des surfaces frontales (6, 7) des outils (4, 5) agencées à l'opposé, surveillance de la fente de travail (8) avec un premier dispositif de sécurité optique (20), qui fournit un premier faisceau de rayons, qui est orienté parallèlement aux surfaces frontales (6, 7) des outils (4, 5) et est détecté par un premier récepteur de lumière (23), surveillance d'un espace de sécurité (31), qui est monté en amont d'une surface latérale (18) d'un outil (4), avec un second dispositif de sécurité optique (30), qui fournit un faisceau de rayons, qui traverse l'espace de sécurité (31), qui est détecté par un second récepteur de lumière (34), dans lequel les deux récepteurs de lumière (23, 34) fournissent respectivement un signal de capteur à une commande de sécurité (17), qui interrompt une fourniture d'énergie d'entraînement à un entraînement d'outil, qui est réalisé pour permettre un déplacement de travail pour l'outil mobile (4), lorsqu'une interruption du faisceau de rayons respectif entraîne une modification du signal de capteur respectif, qui est supérieure à une valeur seuil prédéfinissable, **caractérisé en ce que** le premier dispositif de sécurité optique (20) et le second dispositif de sécurité optique (30) se déplacent de manière synchrone par rapport à l'outil (4) agencé de manière mobile au niveau du bâti de machine (2).

11. Procédé selon la revendication 10, **caractérisé en ce qu'**une désactivation au moins partielle du second dispositif de sécurité optique (30) a lieu, lorsqu'une distance entre les surfaces frontales (6, 7) des outils (4, 5) passe sous une valeur de distance prédéfinissable.

12. Procédé selon la revendication 10, **caractérisé en ce qu'**une activation au moins partielle du second dispositif de sécurité optique (30) a lieu, lorsqu'une distance entre les surfaces frontales (6, 7) des outils (4, 5) passe sous une valeur de distance prédéfinissable.

13. Procédé selon la revendication 10, 11 ou 12, **caractérisé en ce que** la commande de sécurité (17) interrompt la fourniture d'énergie d'entraînement à l'entraînement d'outil et/ou à un dispositif d'entraînement (16) pour une butée de pièce (15), lorsqu'une intervention d'un utilisateur dans une zone d'espace sécurisée par le faisceau de rayons respectif est déterminée à l'aide d'une interruption au moins partielle du faisceau de rayons respectif, il y a en particulier une modification du signal de capteur du capteur de lumière respectif (23, 34, 44) d'une valeur prédéfinissable.
